# EUROPÄISCHE PATENTSCHRIFT

(11) **EP 3 050 648 B1**
(45) Veröffentlichungstag und Bekanntmachung des Hinweises auf die Patenterteilung: **17.10.2018**
(21) Anmeldenummer: 15201046.8
(22) Anmeldetag: 18.12.2015
(51) Int. Cl.: B22F 3/105, B22F 5/04, B29C 64/153, C04B 35/632, B23P 6/00, B23K 26/342, B33Y 10/00, B33Y 30/00, B23K 101/00, B22F 7/06

(54) **VORRICHTUNG UND VERFAHREN ZUR HERSTELLUNG ODER REPARATUR EINES DREIDIMENSIONALEN OBJEKTS**
DEVICE AND METHOD FOR PRODUCING OR REPAIRING A THREE-DIMENSIONAL OBJECT
DISPOSITIF ET PROCEDE DE FABRICATION OU DE REPARATION D'UN OBJET TRIDIMENSIONNEL

(30) Priorität: 28.01.2015 DE 102015201425
(43) Veröffentlichungstag der Anmeldung: 03.08.2016
(73) Patentinhaber: MTU Aero Engines AG, 80995 München (DE)
(72) Erfinder: Fisser, Maximilian, 83684 Tegernsee (DE)

(56) Entgegenhaltungen:
- DE-A1-102010 052 206
- DE-A1-102011 088 158

## Beschreibung

Die Erfindung betrifft Vorrichtungen zur Herstellung oder Reparatur eines dreidimensionalen Objekts gemäß der Ansprüche 1 und 7. Die Erfindung betrifft weiterhin ein Verfahren zur Herstellung oder Reparatur eines dreidimensionalen Objekts gemäß des Anspruchs 11 sowie Gasleitvorrichtungen gemäß der Ansprüche 12 und 13 zur Verwendung in einer Vorrichtung zur generativen Herstellung oder Reparatur eines dreidimensionalen Objekts.

Verfahren und Vorrichtungen zur Herstellung von dreidimensionalen Objekten, insbesondere von Bauteilen sind in einer großen Vielzahl bekannt. Insbesondere sind generative Fertigungsverfahren (sog. Rapid Manufacturing- bzw. Rapid Prototyping-Verfahren) bekannt, bei denen das dreidimensionale Objekt beziehungsweise das Bauteil durch pulverbettbasierte, additive Fertigungsverfahren schichtweise aufgebaut wird. Vorwiegend metallische Bauteile können beispielsweise durch Laser- bzw. Elektronenstrahlschmelz- oder -sinterverfahren hergestellt werden. Dabei wird zunächst schichtweise mindestens ein pulverförmiger Bauteilwerkstoff auf eine Bauplattform im Bereich einer Aufbau- und Fügezone der Vorrichtung aufgetragen. Anschließend wird der Bauteilwerkstoff schichtweise lokal verschmolzen und/oder versintert, indem dem Bauteilwerkstoff im Bereich der Aufbau- und Fügezone Energie mittels wenigstens eines Hochenergiestrahls, zum Beispiel eines Elektronen- oder Laserstrahls zugeführt wird. Der Hochenergiestrahl wird dabei in Abhängigkeit einer Schichtinformation der jeweils herzustellenden Bauteilschicht gesteuert. Nach dem Verschmelzen und/oder Versintern wird die Bauplattform schichtweise um eine vordefinierte Schichtdicke abgesenkt. Danach werden die genannten Schritte bis zur endgültigen Fertigstellung des Bauteils wiederholt. Vergleichbare additive Verfahren sind zur Herstellung von Keramik- oder Kunststoffelementen bekannt.

Aus dem Stand der Technik sind insbesondere auch generative Herstellverfahren für die Herstellung von Bauteilen einer Strömungsmaschine, wie beispielsweise von Bauteilen eines Flugtriebwerks oder einer Gasturbine bekannt, z.B. das in der DE 10 2009 051 479 A1 beschriebene Verfahren bzw. eine entsprechende Vorrichtung zur Herstellung eines Bauteils einer Strömungsmaschine. Bei diesem Verfahren wird durch schichtweisen Auftrag von mindestens einem pulverförmigen Bauteilwerkstoff auf einer Bauplattform im Bereich einer Aufbau- und Fügezone sowie schichtweises und lokales Schmelzen oder Sintern des Bauteilwerkstoffs mittels im Bereich der Aufbau- und Fügezone zugeführter Energie ein entsprechendes Bauteil hergestellt. Die Zufuhr der Energie erfolgt hierbei über Laserstrahlen, wie beispielsweise CO₂-Laser, Nd:YAG-Laser, Yb-Faserlaser sowie Diodenlaser, oder durch Elektronenstrahlen. Die DE 102010 052 206 A1 beschreibt eine weitere Vorrichtung und ein weiteres Verfahren zum Herstellen von dreidimensionalen Objekten, wobei die Vorrichtung eine Umlenkvorrichtung aufweist um Nebenprodukte, die während der Herstellung der Objekten entstehen, gezielt abzuführen.

Der Abtransport von Prozessnebenprodukten wird bei den gattungsgemäßen Vorrichtungen und Verfahren üblicherweise durch eine Schutzgasströmung umgesetzt, die meist über die genannte Bauplattform beziehungsweise eine Aufbau- und Fügezone geführt wird. Bekannte Vorrichtungen zur additiven Fertigung von dreidimensionalen Objekten umfassen dabei mehrere Einströmdüsen für das Schutzgas sowie mindestens eine Absaugdüse. Insbesondere werden Ein- und Absaugströmdüsen verwendet, die seitlich über der Aufbau- und Fügezone im Bauraum beziehungsweise der Prozesskammer gegenüberliegend angeordnet sind. Hierbei ist es vorteilhaft, wenn die Schutzgasströmung homogen hinsichtlich Strömungsrichtung und Strömungsgeschwindigkeit über die Bauplattform geleitet wird. Allerdings gibt es im Bauraum beziehungsweise der Prozesskammer zwei markante Komponenten, die diese Homogenität beeinflussen. Zum einem der Überlauf zur Aufnahme von überschüssigem Werkstoff und zum anderen der Beschichter selbst. Beide Komponenten beeinflussen die Strömungsrichtung und Strömungsgeschwindigkeit der Schutzgasströmung negativ. Insbesondere kann es zu Verwirbelungen des Schutzgasstroms an dem Beschichter und zu einem Abfall der Strömung in Richtung des Überlaufbehälters kommen. Dies führt zu einem mangelnden Abtransport von Prozessnebenprodukten der generativen Fertigungsverfahren. So entstehen beispielsweise bei bekannten Vorrichtungen zum selektiven Laserstrahlschmelzen in bestimmten Bauraumbereichen vermehrt Fehler im Prozess und im Bauteil, sodass diese Bereiche für die Produktion von Serienbauteilen gesperrt werden müssen. Diese Fehler entstehen insbesondere aufgrund des genannten mangelnden Abtransports von Prozessnebenprodukten. Bei Prozessnebenprodukten kann es sich bei dem selektiven Laserstrahlschmelzen insbesondere um Schmauch (Schweißrauch), Spritzer, Auswurf und verblasenes Pulver handeln. Besonders Schmauch führt zu einer Defokussierung und Abschirmung des Laserstrahls. Dadurch sinkt die auf den zu verschmelzenden Werkstoff einzubringende Energiedichte und das Pulver wird nur mangelhaft aufgeschmolzen. Es erfolgt eine mangelnde Anbindung an das Bauteil, wodurch wiederum Bindefehler im Bauteil entstehen können. Spritzer und Auswurf erhöhen zudem die Schichtdicke lokal deutlich. Dadurch können wiederum eine mangelnde Anbindung an das Bauteil und Bindefehler entstehen.

Aufgabe der vorliegenden Erfindung ist es daher, eine Vorrichtung und ein Verfahren der eingangs genannten Art zu schaffen, die einen verbesserten Abtransport von bei additiven Fertigungsverfahren entstehenden Prozessnebenprodukten aus einem Bereich einer Aufbau- und Fügezone gewährleistet. Zudem besteht die Aufgabe, Gasleitvorrichtungen zu schaffen, die ebenfalls einen verbesserten Abtransport von bei additiven Fertigungsverfahren entstehenden Prozessnebenprodukten aus einem Bereich einer Aufbau- und Fügezone einer Vorrichtung zur generativen Herstellung oder Reparatur eines dreidimensionalen Objekts gewährleisten.

Diese Aufgabe wird erfindungsgemäß durch Vorrichtungen zur Herstellung oder Reparatur eines dreidimensionalen Objekts mit den Merkmalen der Patentansprüche 1 und 7, sowie durch ein Verfahren mit den Merkmalen des Anspruchs 11 gelöst. Zudem werden diese Aufgaben durch Gasleitvorrichtungen mit den Merkmalen der Ansprüche 12 und 13 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Vorrichtung als vorteilhafte Ausgestaltungen des Verfahrens sowie der Gasleitvorrichtungen und umgekehrt anzusehen sind.

Ein erster Aspekt der Erfindung betrifft eine Vorrichtung zur Herstellung oder Reparatur eines dreidimensionalen Objekts umfassend mindestens einen Bauraum für ein schichtweises, aufeinanderfolgendes Verfestigen mindestens eines verfestigbaren Werkstoffs in vordefinierten Bereichen zum schichtweisen Aufbau des dreidimensionalen Objekts oder zur schichtweisen Reparatur einzelner Bereiche des dreidimensionalen Objekts innerhalb des Bauraums, mindestens einen verfahrbaren Beschichter zum Auftrag des Werkstoffs auf mindestens eine im Bauraum ausgebildete Aufbau- und Fügezone einer Bauplattform, mindestens eine Einströmdüse und mindestens eine Absaugdüse für ein Prozessgas, wobei die Einströmdüse und die Absaugdüse derart angeordnet sind, dass ein zumindest teilweise über der Aufbau- und Fügezone verlaufender Gasstrom ausgebildet wird, und wenigstens einen Überlaufbehälter. Des Weiteren umfasst die erfindungsgemäße Vorrichtung mindestens eine innerhalb des Bauraums beweglich angeordnete Gasleitvorrichtung, wobei diese derart angeordnet ist, dass der Beschichter und/oder der Überlaufbehälter in einer Verschlussstellung der Gasleitvorrichtung zumindest zeitweise von dem Gasstrom abgeschirmt sind. Durch die erfindungsgemäße Anordnung der Gasleitvorrichtung können zumindest zwei Vorrichtungskomponenten, nämlich der Beschichter und der Überlaufbehälter, zumindest jeweils zeitweise von dem über der Aufbau- und Fügezone verlaufenden Gasstrom abgeschirmt werden. Damit dient die Gasleitvorrichtung vorteilhafterweise zur Optimierung der Strömungsführung im Bauraum beziehungsweise der Prozesskammer der Vorrichtung. Der negative Einfluss des Überlaufbehälters und/oder des Beschichters auf die Gasströmung wird deutlich verringert. Dadurch ergeben sich homogenere Strömungsrichtungen und Strömungsgeschwindigkeiten der Gasströmung im Bauraum der Vorrichtung, so dass es zu einem verbesserten Abtransport der bei additiven Fertigungsverfahren entstehenden Prozessnebenprodukte aus dem Bereich der Aufbau- und Fügezone kommt. Damit kann die Fertigungsqualität der herzustellenden dreidimensionalen Objekte oder die Qualität einer entsprechenden Reparatur der dreidimensionalen Objekte deutlich verbessert werden.

Die Bewegung der Gasleitvorrichtung erfolgt bei der erfindungsgemäßen Vorrichtung mittels des Beschichters oder mittels einer Antriebseinheit. Wird der Beschichter zur Bewegung der Gasleitvorrichtung verwendet, kann auf zusätzliche Antriebsmittel verzichtet werden. Es ist aber auch möglich, dass die Gasleitvorrichtung mittels einer Antriebseinheit, wie zum Beispiel einem Motor, insbesondere einem Elektromotor, oder über eine Drehfeder bewegt und gesteuert wird.

Die Gasleitvorrichtung der erfindungsgemäßen Vorrichtung ist in Form eines Schaufelrads mit mindestens drei Schaufelblättern ausgebildet und in einem Bereich überhalb des Überlaufbehälters mittels einer Antriebseinheit drehbar angeordnet ist oder derart in einem Bereich überhalb des Überlaufbehälters drehbar angeordnet, dass bei einem Überfahren der Gasleitvorrichtung durch den Beschichter dieser mit zumindest einem Teilbereich der Schaufelblätter in Berührung kommt und die Gasleitvorrichtung in Bewegung setzt, so dass diese zumindest zeitweise in der Verschlußstellung verbleibt. Die erfindungsgemäße Ausgestaltung der Gasleitvorrichtung in Form eines Schaufelrads bewirkt, dass der Überlaufbehälter nahezu ausnahmslos mittels der Schaufelblätter von der Gasströmung getrennt wird. Ein Überlaufen der Gasströmung in den Überlaufbehälter wird zuverlässig verhindert. Zudem wird der Beschichter in einer Verfahrposition über dem Überlaufbehälter ebenfalls durch jeweils mindestens ein Schaufelblatt von der Gasströmung über der Aufbau- und Fügezone zuverlässig abgeschirmt. Die Homogenität der Strömungsrichtung und der Strömungsgeschwindigkeit des Gasstroms über der Aufbau- und Fügezone wird deutlich verbessert. Zudem besteht die Möglichkeit, dass mindestens ein Schaufelblatt derart ausgebildet ist, dass ein Ende des Schaufelblatts an einer Kante des Überlaufbehälters und/oder der Aufbau- und Fügezone und/oder einem

Auflagebereich zwischen der Bauplattform und dem Überlaufbehälter anliegt und dabei zumindest der Überlaufbehälter von dem Gasstrom mittels des anliegenden Schaufelblatts und des mindestens einen, nicht-anliegenden Schaufelblatts abgeschirmt ist. Die Möglichkeit des Anliegens eines der Schaufelblätter an der Kante des Überlaufbehälters und/oder der Aufbau- und Fügezone und/oder dem genannten Auflagebereich verhindert zuverlässig, dass der Gasstrom in den Überlaufbehälter abfließt, so dass wiederum die Homogenität der Strömungsrichtung und der Strömungsgeschwindigkeit des Gasstroms über der Aufbau- und Fügezone deutlich verbessert wird. Des Weiteren besteht die Möglichkeit, dass die Gasleitvorrichtung drei Schaufelblätter umfasst, wobei die Schaufelblätter in einem Winkel von 120° zueinander angeordnet sind. Zudem besteht die Möglichkeit, dass mindestens ein Schaufelblatt schwerer als die anderen Schaufelblätter ausgebildet ist und/oder eine Drehachse der Gasleitvorrichtung exzentrisch zu einem Schnittpunkt der Schaufelblätter angeordnet ist. Durch die letztgenannte vorteilhafte Maßnahme ist gewährleistet, dass die entsprechenden Schaufelblätter stabil an der Kante des Überlaufbehälters, der Aufbau- und Fügezone oder dem genannten Auflagebereich zwischen der Bauplattform und dem Überlaufbehälter anliegen und die Gasströmung über der Aufbau- und Fügezone zuverlässig abschirmen.

Des Weiteren entspricht die Länge der Schaufelblätter parallel zur Drehachse der Gasleitvorrichtung vorteilhafterweise mindestens der Länge der Kante des Überlaufbehälters und/oder der Aufbau- und Fügezone und/oder dem Auflagebereich zwischen der Bauplattform und dem Überlaufbehälter, an dem mindestens ein Schaufelblatt zumindest zeitweise anliegt. Durch eine derartige Ausgestaltung der Länge der Schaufelblätter beziehungsweise der Gasleitvorrichtung ist wiederum eine zuverlässige Abschirmung gegenüber dem über der Aufbau- und Fügezone verlaufenden Gasstrom gegeben. Zudem können die Schaufelblätter der Gasleitvorrichtung derart zueinander angeordnet sein, dass bei einem Anliegen eines Schaufelblatts an der Kante des Überlaufbehälters und/oder der Aufbau- und Fügezone und/oder dem Auflagebereich zwischen der Bauplattform und dem Überlaufbehälter, überschüssiger Werkstoff aus dem Bereich der Bauplattform mittels des Beschichters in einen Aufnahmebereich zwischen dem anliegenden Schaufelblatt und dem nicht-anliegenden Schaufelblatt verbracht wird und mittels einer Drehbewegung der Gleitvorrichtung in Richtung entgegen der Bauplattform in den Überlaufbehälter transportiert wird. Eine derartige vorteilhafte Ausgestaltung der Gasleitvorrichtung ermöglicht einen ungestörten und kontinuierlichen Verfahrensablauf. Neben einer zuverlässigen Abschirmung durch die Gasleitvorrichtung wird über die durch den Beschichter initiierte Drehbewegung der Gasleitvorrichtung der überschüssige Bauteilwerkstoff in den Überlaufbehälter verbracht.

Ein zweiter Aspekt der Erfindung betrifft eine Vorrichtung zur Herstellung und Reparatur eines dreidimensionalen Objekts umfassend eine Gasleitvorrichtung, wobei die Gasleitvorrichtung mindestens ein Wandelement umfasst, wobei das Wandelement mit einem ersten Ende an einer dem Bauraum zugewandten Seite des Beschichters angeordnet und mit einem dem ersten Ende gegenüberliegenden zweiten Ende in einer in mindestens einer Seitenwand des Bauraums ausgebildeten Führung geführt ist, wobei die Führung im Bereich der Aufbau- und Fügezone der Bauplattform über dieser angeordnet ist und am Ende der Aufbau- und Fügezone in Richtung des Überlaufbehälters abfällt. Auch bei dieser Ausführungsform der Gasleitvorrichtung dient diese zur Optimierung der Strömungsführung im Bauraum der erfindungsgemäßen Vorrichtung, wobei wiederum der Überlaufbehälter und/oder der Beschichter, falls sich Letzterer im Bereich über dem Überlaufbehälter befindet, zuverlässig von dem Gasstrom über der Aufbau- und Fügezone abgeschirmt wird. Zudem ist durch die Führung des Wandelements über dem Bereich der Aufbau- und Fügezone gewährleistet, dass das Wandelement nicht mit der Aufbau- und Fügezone beziehungsweise dem dortigen Pulverbett in Berührung kommt. Durch das Abfallen der Führung am Ende der Aufbau- und Fügezone in Richtung des Überlaufbehälters erfolgt dann die Abschottung des Gasstroms durch das Wandelement gegenüber dem Überlaufbehälter. Da das Wandelement an der dem Bauraum zugewandten Seite des Beschichters angeordnet ist, wird auch dieser zumindest zeitweise von dem genannten Gasstrom abgeschirmt. Hierdurch ist wiederum eine deutliche Verbesserung der Homogenität der Strömungsrichtung und Strömungsgeschwindigkeit des Gasstroms über der Aufbau- und Fügezone gewährleistet. Dadurch wird der Abtransport von Prozessnebenprodukten durch den Gasstrom deutlich verbessert. Eine entsprechende Verbesserung der Qualität der herzustellenden dreidimensionalen Objekte oder der entsprechenden Reparaturen der dreidimensionalen Objekte mittels der additiven Verfahren ist die Folge. Dabei ist es möglich, dass das Wandelement biegsam oder nicht-biegsam ausgebildet ist. Zudem besteht die Möglichkeit, dass das Wandelement über ein Dreh- oder Scharniergelenk an dem Beschichter angeordnet ist. Durch diese Maßnahmen kann das Wandelement ohne Weiteres in der Führung geführt werden, wobei das Wandelement - wie bereits oben erwähnt - in unterschiedlichen Verfahrstellungen des Beschichters unterschiedliche Neigungen gegenüber der Aufbau- und Fügezone einnimmt. Des Weiteren besteht die Möglichkeit, dass die Führung des Wandelements im Bereich der Aufbau- und Fügezone der Bauplattform über dem Gasstrom verlaufend ausgebildet ist. Durch die zumindest zeitweise Begrenzung des Strömungsraums durch das Wandelement kann die Geschwindigkeit des Gasstroms gesteigert werden. Die Erhöhung der Strömungsgeschwindigkeit bewirkt wiederum einen verbesserten Abtransport der genannten Prozessnebenprodukte. Bei dem im Vorhergehenden beschriebenen Bauraum der Vorrichtung handelt es sich üblicherweise um eine Prozesskammer zur Durchführung des generativen Herstellungs- oder Reparaturverfahrens. Bei dem herzustellenden oder zu reparierenden dreidimensionalen Objekt kann es sich um ein Bauteil oder einen Bauteilbereich eines Flugtriebwerks, insbesondere eines Verdichters oder einer Turbine handeln. Der verwendete Werkstoff kann pulverförmig, flüssig oder pastös ausgebildet sein und besteht üblicherweise aus Metall, einer Metalllegierung, Keramik oder Kunststoff oder einer Mischung daraus.

Ein dritter Aspekt der Erfindung betrifft ein Verfahren zur Herstellung oder Reparatur eines dreidimensionalen Objekts, wobei das erfindungsgemäße Verfahren zumindest folgende Schritte umfasst: a) Schichtweises Auftragen von mindestens einem pulverförmigen Werkstoff mittels mindestens einem Beschichter auf mindestens eine Bauplattform im Bereich einer Aufbau- und Fügezone, wobei der Beschichter relativ zu der Bauplattform bewegbar ist; b) schichtweises und lokales Verschmelzen und/oder Versintern des Werkstoffs durch Zuführen von Energie mittels wenigstens eines Hochenergiestrahls im Bereich der Aufbau- und Fügezone zum Ausbilden einer Schicht des Objekts; c) schichtweises Absenken der Bauplattform um eine vordefinierte Schichtdicke: und d) Wiederholen der Schritte a) bis c) bis zur Fertigstellung des Objekts. Dabei wird für ein zumindest zeitweises Abschirmen des Beschichters und/oder eines Überlaufbehälters für überschüssigen Werkstoff von einem zumindest über der Aufbau- und Fügezone verlaufenden Gasstrom mindestens eine Gasleitvorrichtung mittels des Beschichters oder mittels einer Antriebseinheit in eine Verschlussstellung bewegt. Durch die Verschlussstellung der Gasleitvorrichtung und der damit verbundenen Abschirmung des Beschichters und/oder des Überlaufbehälters von dem Gasstrom über der Aufbau- und Fügezone wird die Homogenität der Strömungsrichtung und Strömungsgeschwindigkeit des Gasstroms deutlich verbessert. Dadurch ist wiederum ein verbesserter Abtransport der bei den additiven Fertigungsverfahren entstehenden Prozessnebenprodukten gewährleistet, so dass es zu einer wiederum deutlichen Verbesserung der Qualität der herzustellenden dreidimensionalen Objekte beziehungsweise der zu reparierenden dreidimensionalen Objekte kommt.

Die Gasleitvorrichtung bei dem erfindungsgemäßen Verfahren ist in Form eines Schaufelrads mit mindestens drei Schaufelblättern ausgebildet und derart in einem Bereich überhalb des Überlaufbehälters der Vorrichtung drehbar angeordnet ist, so dass bei einem Überfahren der Gasleitvorrichtung durch den Beschichter dieser mit zumindest einem Teilbereich der Schaufelblätter in Berührung kommt und die Gasleitvorrichtung in Bewegung setzt oder die Gasleitvorrichtung umfasst mindestens ein Wandelement, wobei das Wandelement mit einem ersten Ende an einer einem Bauraum der Vorrichtung zugewandten Seite des Beschichters angeordnet und bewegt wird und mit einem dem ersten Ende gegenüberliegenden zweiten Ende in einer in mindestens einer Seitenwand des Bauraums ausgebildeten Führung geführt ist, wobei die Führung im Bereich der Aufbau- und Fügezone der Bauplattform über dieser angeordnet ist und am Ende der Aufbau- und Fügezone in Richtung des Überlaufbehälters abfällt. Durch diese Ausgestaltungen und Anordnungen der beweglich ausgebildeten Gasleitvorrichtungen werden der Überlaufbehälter und der Beschichter, insbesondere wenn sich dieser in einem Bereich über dem Überlaufbehälter befindet, zuverlässig von dem Gasstrom über der Aufbau- und Fügezone abgeschirmt abgeschirmt. Die zumindest zeitweise Abschirmung des Gasstroms bewirkt wiederum eine Verbesserung der Homogenität der Strömungsrichtung und der Strömungsgeschwindigkeit des Gasstroms über der Aufbau- und Fügezone.

Die sich aus der Verwendung der Vorrichtung gemäß dem ersten Erfindungsaspekt ergebenden Merkmale und Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

Ein vierter Aspekt der Erfindung betrifft eine Gasleitvorrichtung zur Verwendung in einer Vorrichtung zur generativen Herstellung oder Reparatur eines dreidimensionalen Objekts, wobei die Gasleitvorrichtung in Form eines Schaufelrads mit mindestens drei Schaufelblättern ausgebildet ist und derart in einem Bereich überhalb eines Überlaufbehälters der Vorrichtung drehbar angeordnet ist, dass beim Überfahren der Gasleitvorrichtung durch einen Beschichter der Vorrichtung dieser mit zumindest einem Teilbereich der Schaufelblätter in Berührung kommt und die Gasleitvorrichtung in Bewegung setzt, so dass diese zumindest zeitweise in einer Verschlußstellung verbleibt. Es ist auch möglich, dass die Gasleitvorrichtung mittels einer Antriebseinheit - ohne die Berührung durch den Beschichter - drehbar ist. Durch die Ausgestaltung der Gasleitvorrichtung in Form eines Schaufelrads und dessen Anordnung in einem Bereich überhalb des Überlaufbehälters kann dieser zuverlässig über zumindest einen Teil der Schaufelblätter von einem Gasstrom abgeschirmt werden, der insbesondere über einer Aufbau- und Fügezone der Vorrichtung ausgebildet ist. Die Abschirmung bewirkt wiederum, dass ein Überlaufen oder Abfallen des Gasstroms in den Überlaufbehälter minimiert wird. Dadurch kann die Strömungsrichtung und die Strömungsgeschwindigkeit des Gasstroms optimiert werden, so dass insbesondere Prozessnebenprodukte zuverlässig aus der Vorrichtung abgeführt werden können. Zudem besteht die Möglichkeit, dass mindestens ein Schaufelblatt derart ausgebildet ist, dass ein Ende des Schaufelblatts an einer Kante des Überlaufbehälters und/oder der Aufbau- und Fügezone und/oder einem Auflagebereich zwischen der Bauplattform und dem Überlaufbehälter anliegt und dabei zumindest der Überlaufbehälter von dem Gasstrom mittels des anliegenden Schaufelblatts und des mindestens einen, nicht-anliegenden Schaufelblatts abgeschirmt ist. Die Möglichkeit des Anliegens eines der Schaufelblätter an der Kante des Überlaufbehälters und/oder der Aufbau- und Fügezone und/oder dem genannten Auflagebereich verhindert zuverlässig, dass der Gasstrom in den Überlaufbehälter abfließt, so dass wiederum die Homogenität der Strömungsrichtung und der Strömungsgeschwindigkeit des Gasstroms über der Aufbau- und Fügezone deutlich verbessert wird. Des Weiteren besteht die Möglichkeit, dass die Gasleitvorrichtung drei Schaufelblätter umfasst, wobei die Schaufelblätter in einem Winkel von 120° zueinander angeordnet sind. Zudem besteht die Möglichkeit, dass mindestens ein Schaufelblatt schwerer als die anderen Schaufelblätter ausgebildet ist und/oder eine Drehachse der Gasleitvorrichtung exzentrisch zu einem Schnittpunkt der Schaufelblätter angeordnet ist. Durch die letztgenannte vorteilhafte Maßnahme ist gewährleistet, dass die entsprechenden Schaufelblätter stabil an der Kante des Überlaufbehälters, der Aufbau- und Fügezone oder dem genannten Auflagebereich zwischen der Bauplattform und dem Überlaufbehälter anliegen und die Gasströmung über der Aufbau- und Fügezone zuverlässig abschirmen. Des Weiteren entspricht die Länge der Schaufelblätter parallel zur Drehachse der Gasleitvorrichtung vorteilhafterweise mindestens der Länge der Kante des Überlaufbehälters und/oder der Aufbau- und Fügezone und/oder dem Auflagebereich zwischen der Bauplattform und dem Überlaufbehälter, an dem mindestens ein Schaufelblatt zumindest zeitweise anliegt. Durch eine derartige Ausgestaltung der Länge der Schaufelblätter beziehungsweise der Gasleitvorrichtung ist wiederum eine zuverlässige Abschirmung gegenüber dem über der Aufbau- und Fügezone verlaufenden Gasstrom gegeben. Zudem können die Schaufelblätter der Gasleitvorrichtung derart zueinander angeordnet sein, dass bei einem Anliegen eines Schaufelblatts an der Kante des Überlaufbehälters und/oder der Aufbau- und Fügezone und/oder dem Auflagebereich zwischen der Bauplattform und dem Überlaufbehälter, überschüssiger Werkstoff aus dem Bereich der Bauplattform mittels des Beschichters in einen Aufnahmebereich zwischen dem anliegenden Schaufelblatt und dem nicht-anliegenden Schaufelblatt verbracht wird und mittels einer Drehbewegung der Gleitvorrichtung in Richtung entgegen der Bauplattform in den Überlaufbehälter transportiert wird. Eine derartige vorteilhafte Ausgestaltung der Gasleitvorrichtung ermöglicht einen ungestörten und kontinuierlichen Verfahrensablauf. Neben einer zuverlässigen Abschirmung durch die Gasleitvorrichtung wird über die durch den Beschichter oder die Antriebseinheit initiierte Drehbewegung der Gasleitvorrichtung der überschüssige Bauteilwerkstoff in den Überlaufbehälter verbracht.

Die sich aus der Verwendung der Vorrichtung gemäß dem ersten Erfindungsaspekt ergebenden Merkmale und Vorteile sind den Beschreibungen des ersten Erfindungsaspekts zu entnehmen, wobei vorteilhafte Ausgestaltungen des ersten Erfindungsaspekts als vorteilhafte Ausgestaltungen des vierten sowie des dritten Erfindungsaspekts und umgekehrt anzusehen sind.

Ein fünfter Aspekt der Erfindung betrifft eine Gasleitvorrichtung zur Verwendung in einer Vorrichtung zur generativen Herstellung oder Reparatur eines dreidimensionalen Objekts, wobei die Gasleitvorrichtung mindestens ein Wandelement umfasst und das Wandelement mit einem ersten Ende an einer einem Bauraum der Vorrichtung zugewandten Seite eines Beschichters der Vorrichtung angeordnet und mit einem dem ersten Ende gegenüberliegenden zweiten Ende in einer in mindestens einer Seitenwand des Bauraums ausgebildeten Führung geführt ist, wobei die Führung im Bereich einer Aufbau- und Fügezone einer Bauplattform über dieser angeordnet ist und am Ende der Aufbau- und Fügezone in Richtung eines Überlaufbehälters der Vorrichtung abfällt. Auch durch diese erfindungsgemäße Gasleitvorrichtung kann der Gasstrom über der Aufbau- und Fügezone zumindest zeitweise zuverlässig von dem Überlaufbehälter und dem Beschichter abgeschirmt werden. Hierdurch wird wiederum das Strömungsverhalten, insbesondere die Strömungsrichtung und die Strömungsgeschwindigkeit des Gasstroms optimiert, so dass schädliche Prozessnebenprodukte ohne Weiteres aus dem Bauraum mittels des Gasstroms abgeführt werden können. Zudem ist durch die Führung des Wandelements über dem Bereich der Aufbau- und Fügezone gewährleistet, dass das Wandelement nicht mit der Aufbau- und Fügezone beziehungsweise dem dortigen Pulverbett in Berührung kommt. Durch das Abfallen der Führung am Ende der Aufbau- und Fügezone in Richtung des Überlaufbehälters erfolgt dann die Abschottung des Gasstroms durch das Wandelement gegenüber dem Überlaufbehälter. Da das Wandelement an der dem Bauraum zugewandten Seite des Beschichters angeordnet ist, wird auch dieser zumindest zeitweise von dem genannten Gasstrom abgeschirmt. Hierdurch ist wiederum eine deutliche Verbesserung der Homogenität der Strömungsrichtung und Strömungsgeschwindigkeit des Gasstroms über der Aufbau- und Fügezone gewährleistet. Dadurch wird der Abtransport von Prozessnebenprodukten durch den Gasstrom deutlich verbessert. Eine entsprechende Verbesserung der Qualität der herzustellenden dreidimensionalen Objekte oder der entsprechenden Reparaturen der dreidimensionalen Objekte mittels der additiven Verfahren ist die Folge. Dabei ist es möglich, dass das Wandelement biegsam oder nicht-biegsam ausgebildet ist. Zudem besteht die Möglichkeit, dass das Wandelement über ein Dreh- oder Scharniergelenk an dem Beschichter angeordnet ist. Durch diese Maßnahmen kann das Wandelement ohne Weiteres in der Führung geführt werden, wobei das Wandelement - wie bereits oben erwähnt - in unterschiedlichen Verfahrstellungen des Beschichters unterschiedliche Neigungen gegenüber der Aufbau- und Fügezone einnimmt. Des Weiteren besteht die Möglichkeit, dass die Führung des Wandelements im Bereich der Aufbau- und Fügezone der Bauplattform über dem Gasstrom verlaufend ausgebildet ist. Durch die zumindest zeitweise Begrenzung des Strömungsraums durch das Wandelement kann die Geschwindigkeit des Gasstroms gesteigert werden. Die Erhöhung der Strömungsgeschwindigkeit bewirkt wiederum einen verbesserten Abtransport der genannten Prozessnebenprodukte.

Die sich aus der Verwendung der Vorrichtung gemäß dem zweiten Erfindungsaspekt ergebenden Merkmale und Vorteile sind den Beschreibungen des zweiten Erfindungsaspekts zu entnehmen, wobei vorteilhafte Ausgestaltungen des zweiten Erfindungsaspekts als vorteilhafte Ausgestaltungen des fünften sowie des vierten und dritten Erfindungsaspekts und umgekehrt anzusehen sind.

Weitere Merkmale der Erfindung ergeben sich aus den Ansprüchen, den Ausführungsbeispielen sowie anhand der Zeichnungen.

Dabei zeigt:
- Fig. 1: eine schematische, teilweise geschnittene Darstellung einer erfindungsgemäßen Vorrichtung zur Herstellung oder Reparatur eines dreidimensionalen Objekts gemäß einer ersten Ausführungsform;
- Fig. 2a bis 2d: eine schematische Darstellung der Funktionsweise der Vorrichtung gemäß Figur 1;
- Fig. 3a: eine schematische Schnittdarstellung einer erfindungsgemäßen Vorrichtung zur Herstellung oder Reparatur eines dreidimensionalen Objekts gemäß einer zweiten Ausführungsform mit einer Gasleitvorrichtung in einer ersten Verfahrposition;
- Fig. 3b: eine schematische Schnittdarstellung der erfindungsgemäßen Vorrichtung gemäß Figur 3a mit der Gasleitvorrichtung in einer zweiten Verfahrposition;
- Fig. 4: eine schematische, teilweise geschnittene Darstellung eines Wandelements der Vorrichtung gemäß den Figuren 3a und 3b.

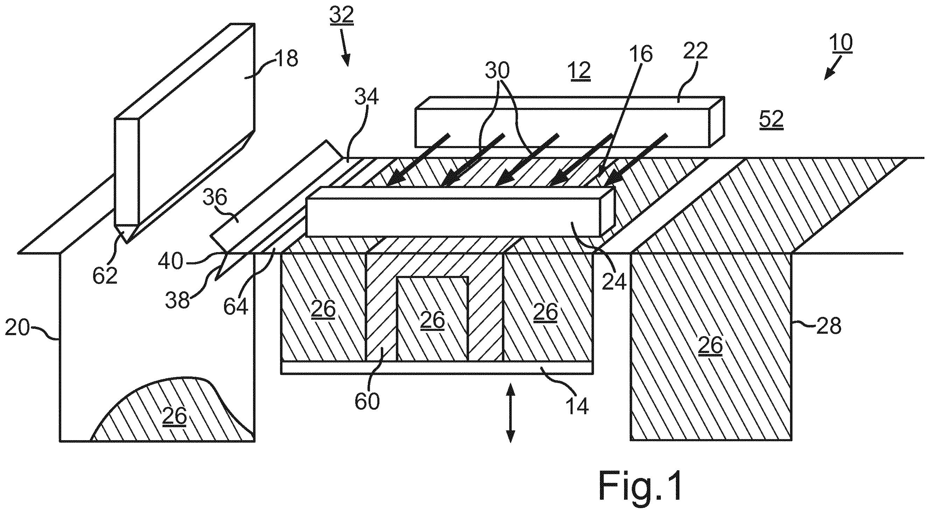

Fig. 1 zeigt eine schematisch dargestellte Vorrichtung 10 zur generativen Herstellung oder generativen Reparatur eines dreidimensionalen Objekts 60 gemäß einer ersten Ausführungsform. Bei dem dreidimensionalen Objekt 60 kann es sich beispielhaft um ein Bauteil einer Strömungsmaschine handeln. Insbesondere kann es sich dabei um ein Bauteil einer Turbine oder eines Verdichters eines Flugtriebwerks handeln. Die Vorrichtung 10 weist dabei einen Beschichter 18 zum Auftrag von mindestens einer Pulverschicht eines Bauteilwerkstoffs 26 auf zumindest eine Aufbau- und Fügezone 16 einer absenkbaren Bauplattform 14 auf. Der Beschichter 18 ist mittels einer Verfahreinheit (nicht dargestellt) innerhalb eines Bauraums 12 der Vorrichtung 10 verfahrbar. Die Bewegung des Beschichters 18 erfolgt dabei über und entlang der Bauplattform 14 beziehungsweise der Aufbau- und Fügezone 16, so dass ein gleichmäßiger und schichtweiser Auftrag des pulverförmigen Bauteilwerkstoffs 26 auf die Bauplattform 14 möglich ist. Der Bauteilwerkstoff beziehungsweise der Werkstoff 26 ist in dem beschriebenen Ausführungsbeispiel pulverförmig ausgebildet. Insbesondere handelt es sich um ein Pulver aus Metall oder einer Metalllegierung. Es besteht aber auch die Möglichkeit, dass in anderen Ausführungsbeispielen weitere Werkstoffe wie zum Beispiel Keramik oder Kunststoff oder eine Mischung aus Metall, Metalllegierung, Keramik oder Kunststoff verwendet wird. Zudem besteht die Möglichkeit, dass der Werkstoff nicht nur pulverförmig, sondern auch pastös oder flüssig aufgebildet sein kann. Gegebenenfalls werden bei Verwendung derartiger Bauteilwerkstoffe andere Auftragsverfahren mittels des Beschichters angewandt. Der Bauteilwerkstoffs 26 ist in einem Vorratsbehälter 28 gelagert und wird hieraus an den Beschichter 18 übergeben. Für einen gleichmäßigen Pulverauftrag auf die Aufbau- und Fügezone 16 weist der Beschichter 18 eine Klinge 62 auf.

Die Vorrichtung 10 umfasst des Weiteren mindestens eine Strahlungsquelle zum Erzeugen eines Hochenergiestrahls (nicht dargestellt), mittels welchem die Pulverschicht im Bereich der Aufbau- und Fügezone 16 lokal unter Ausbildung eines Schmelzbades zu einer Bauteilschicht verschmelzbar und/oder versinterbar ist. In dem dargestellten Ausführungsbeispiel wird ein Laserstrahl verwendet. Es ist aber auch denkbar, Elektronenstrahlen oder neben Hochenergiestrahlen auch Lichtstrahlen, insbesondere UV-Lichtstrahlen zu verwenden. Des Weiteren umfasst die Vorrichtung 10 eine Einströmdüse 22. Über die Einströmdüse 22 wird ein Prozessgas in den Bauraum 12 beziehungsweise die Prozesskammer der Vorrichtung 10 eingeleitet. Bei dem Prozessgas handelt es sich insbesondere um ein Schutz- oder Inertgas. Die Einströmdüse 22 ist als Einströmleiste mit einer Vielzahl von Einströmöffnungen (nicht dargestellt) ausgebildet und ist an einer seitlich ausgebildeten Seitenwand bzw. Rückwand 52 des Bauraums 12 angeordnet. Zudem umfasst die Vorrichtung 10 mindestens eine Absaugdüse 24 zur Absaugung des Prozessgases. Die Absaugdüse 24 ist als Absaugleiste mit einer Vielzahl von Absaugöffnungen (nicht dargestellt) ausgebildet. Zwischen der Einströmdüse 22 und der Absaugdüse 24 wird ein zumindest teilweise über der Bauplattform 14 und der Aufbau- und Fügezone 16 verlaufender Gasstrom 30 ausgebildet. Dabei sind die Einströmdüse 22 und die Absaugdüse 24 in ungefähr gleicher Höhe über Bauplattform 14 und der Aufbau- und Fügezone 16 angeordnet.

Des Weiteren erkannt man, dass neben der Bauplattform 14 ein Überlaufbehälter 20 zur Aufnahme von überschüssigem Werkstoff 26 angeordnet ist. Dabei wird der überschüssige Werkstoff 26 mittels des Beschichters 18 beziehungsweise der an dem Beschichter 18 angeordneten Klinge 62 von der Bauplattform 14 in den Überlaufbehälter 20 verbracht. Zwischen der Aufbau- und Fügezone 16 und dem Überlaufbehälter 20 ist eine Auflagebereich 64 ausgebildet.

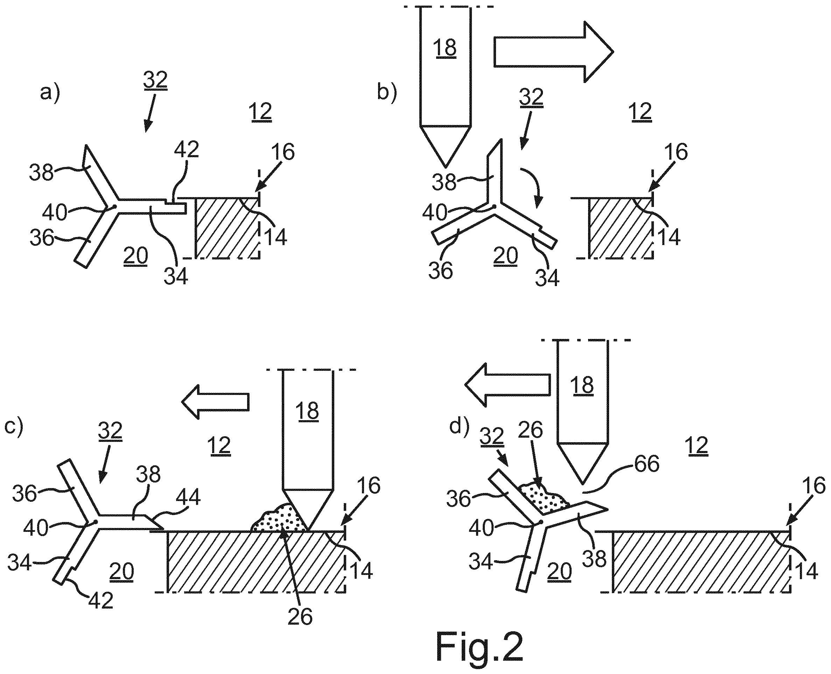

Innerhalb des Bauraums 12 ist eine Gasleitvorrichtung 32 beweglich angeordnet, derart, dass der Beschichter 18 und/oder der Überlaufbehälter 20 in einer Verschlußstellung der Gasleitvorrichtung 32 zumindest zeitweise von dem Gasstrom 30 abgeschirmt sind. Die Bewegung der Gasleitvorrichtung 32 erfolgt mittels des Beschichters 18, wie in den Figuren 2a -2d näher erläutert wird. Man erkennt, dass in dem dargestellten ersten Ausführungsbeispiel die Gasleitvorrichtung 32 in Form eines Schaufelrads mit drei Schaufelblättern 34, 36, 38 ausgebildet ist. Das Schaufelrad ist dabei in einem Bereich überhalb des Überlaufbehälters 20 drehbar angeordnet, so dass bei einem Überfahren der Gasleitvorrichtung 32 durch den Beschichter 18 dieser mit zumindest einem Teilbereich der Schaufelblätter 34, 36, 38 in Berührung kommt und die Gasleitvorrichtung 32 in Bewegung setzt und die Verschlußstellung verbringt. Unter "Verschlußstellung" ist dabei die Position der Gasleitvorrichtung 32 zu verstehen, in der der Gasstrom zumindest teilweise von dem Überlaufbehälter 20 und/oder dem Beschichter 18 abgeschirmt ist. Die Gasleitvorrichtung 32 ist von den Maßen so ausgeführt, dass die Gasströmung 30 gehindert wird, in den Überlauf 20 abzufallen und den Beschichter 18 anzuströmen beziehungsweise zu umströmen. Eine Drehachse 40 der Gasleitvorrichtung 32 erstreckt sich ungefähr senkrecht zur Bewegungsrichtung des Beschichters 18.

Die Figuren 2a bis 2d zeigen eine schematische Darstellung der Funktionsweise der Vorrichtung 10 gemäß Figur 1. Figur 2a zeigt dabei die Gasleitvorrichtung 32 in einer ersten Position, die sich während dem schichtweisen und lokalen Verschmelzen und/oder Versintern des Werkstoffs 26 durch Zuführen von Energie mittels wenigstens eines Hochenergiestrahls (nicht dargestellt) im Bereich der Aufbau- und Fügezone 16 zum Ausbilden einer Schicht des Objekts 60 ergibt. Der Beschichter 18 befindet sich über dem Überlaufbehälter 20, in der Darstellung links von der Gasleitvorrichtung 32. Man erkennt, dass in dieser Position die Gasleitvorrichtung 32 mit dem Schaufelblatt 34 an einer Kante des Überlaufbehälters 20 anliegt. Ein entsprechendes Ende des Schaufelblatts 34 weist dabei eine Ausnehmung 42 auf, in der die Kante des Überlaufbehälters 20 anliegt. Das anliegende Schaufelblatt 34 und das nicht-anliegende Schaufelblatt 36 bilden eine Abschirmung des Überlaufbehälters 20 gegenüber dem Gasstrom über der Aufbau- und Fügezone 16. Beide Schaufelblätter 34, 36 bilden in dieser Position eine erste Verschlußstellung aus. Ist das Verschmelzen oder Versintern einer Schicht des Objekts 60 abgeschlossen, so verfährt der Beschichter 18 von einer Position überhalb des Überlaufbehälters 20 in Richtung des Bauraums 12 beziehungsweise der Bauplattform 14. Die Bewegung des Beschichters 18 ist mittels des Pfeils angedeutet. Während dieses Verfahrens kommt der Beschichter 18 und insbesondere die Klinge 62 des Beschichters 18 in Kontakt mit dem nicht-anliegenden Schaufelblatt 36 und dreht dadurch die Gasleitvorrichtung 32 im Uhrzeigersinn (vergleiche Figur 2b). Diese Drehung wird durch ein Anschlagen des Schaufelblatts 38 - wie in Figur 2c gezeigt - gestoppt. In dieser Position liegt das Schaufelblatt 38 nunmehr auf der Kante des Überlaufbehälters 20 auf. Beide Schaufelblätter 38, 36 bilden in dieser Position eine zweite Verschlußstellung aus (vergleiche Figur 2c). Das aufliegende Ende des Schaufelblatts 38 kann zudem eine Abschrägung 44 zur Besseren Aufnahme von überschüssigem Werkstoff 26 aufweisen. Die Gasleitvorrichtung 32 verbleibt zunächst in dieser Position. Wird der Beschichter 18 nunmehr von der Bauplattform 14 kommend und überschüssiges Werkstoffpulver 26 mit sich führend wieder in Richtung des Überlaufbehälters 20 verfahren, so wird das überschüssige Werkstoffpulver 26 in einen Aufnahmebereich 66 zwischen dem anliegenden Schaufelblatt 38 und dem nicht-anliegenden Schaufelblatt 36 verbracht und mittels einer Drehbewegung der Gasleitvorrichtung 32 in Richtung entgegen der Bauplattform 14 in den Überlaufbehälter 20 transportiert (vergleiche auch Figur 2d). Die Drehbewegung der Gasleitvorrichtung 32 erfolgt wiederum durch den Kontakt mit dem Beschichter 18 und wird - wie in Figur 2d dargestellt - gegen den Uhrzeigersinn gedreht. Diese Drehung entgegen dem Uhrzeigersinn wird wiederum durch ein Anschlagen des Schaufelblatts 34 unterhalb einer Kante des Überlaufbehälters 20 gestoppt. Die Gasleitvorrichtung 32 befindet sich wieder in der ersten Verschlußstellung, sie wird nur durch den Vorschub des Beschichters 18 gedreht. Es ist kein weiterer Antrieb notwendig. Des Weiteren ist anzumerken, dass das nicht-anliegende Schaufelblatt 36 einerseits kürzer als die anderen Schaufelblätter 34, 38 ausgebildet ist und zudem ein höheres Gewicht aufweist. Dadurch ist eine stabile Lage der Gasleitvorrichtung, wie sie in den Figuren 2a und 2c dargestellt sind, möglich.

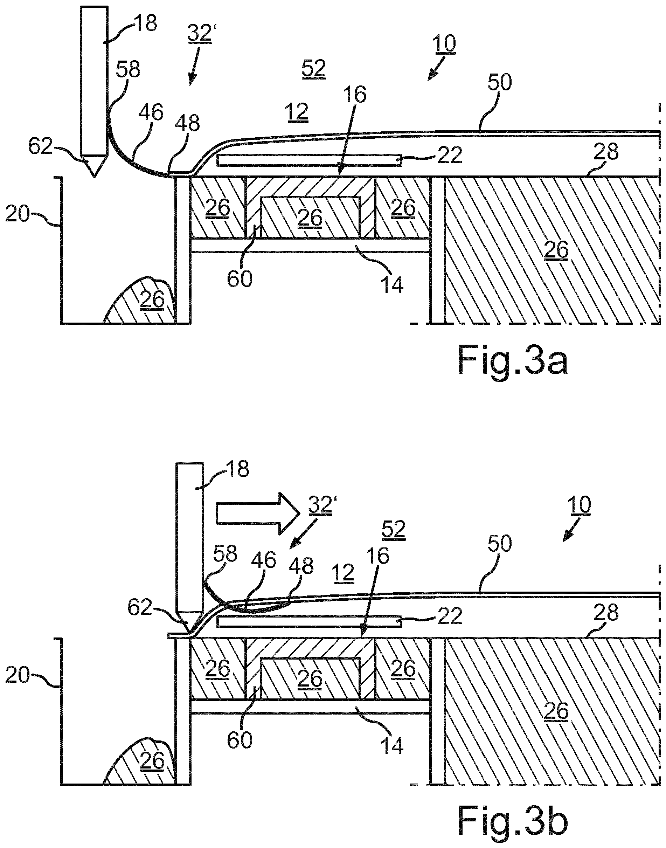

Figur 3a zeigt eine schematische Darstellung einer Vorrichtung 10 zur Herstellung oder Reparatur eines dreidimensionalen Objekts 60 gemäß einer zweiten Ausführungsform mit einer Gasleitvorrichtung 32' in einer ersten Verfahrposition. Man erkennt, dass gemäß dieser Ausführungsform eine Gasleitvorrichtung 32' ein Wandelement 46 umfasst, wobei das Wandelement 46 mit einem ersten Ende an einer dem Bauraum 12 zugewandten Seite des Beschichters drehbar über ein Drehgelenk/Scharniergelenk 58 angeordnet ist. Mit einem diesem ersten Ende gegenüberliegenden Ende ist das Wandelement 46 über einen Stift 48 in einer Führung 50 geführt. Die Führung 50 ist wiederum in einer Seitenwand 52 des Bauraums 12 ausgebildet. Man erkennt, dass die Führung 50 im Bereich der Aufbau- und Fügezone 16 über dieser angeordnet ist und am Ende der Aufbau- und Fügezone 16 in Richtung des Überlaufbehälters 20 abfällt. Zudem wird deutlich, dass gemäß diesem Ausführungsbeispiel das Wandelement 46 biegsam ausgebildet ist. Mittels der Bewegung des Beschichters 18 wird das Wandelement 46 der Gasleitvorrichtung 32' entlang der Führung 50 bewegt. Die Führung 50 ist zudem im Bereich der Aufbau- und Fügezone 16 der Bauplattform 14 über dem Gasstrom 30 beziehungsweise über der Einströmdüse 22 und der Absaugdüse 24 (nicht dargestellt) angeordnet. In Zusammenschau mit der Figur 3b, welche das Wandelement 46 in einer zweiten Verfahrposition darstellt, wird deutlich, dass bei einer Bewegung des Beschichters 18 in Richtung des Überlaufbehälters 20 sich das zweite Ende des Wandelements 46, welches mittels des Stiftes 48 in der Führung 50 geführt ist, in Richtung des Überlaufbehälters 20 absenkt und dadurch den Überlaufbehälter 20 und den Beschichter 18 von dem Gasstrom 30 über der Aufbau- und Fügezone 16 abschirmt. Die Gasleitvorrichtung 32' befindet sich in einer Verschlußstellung. Unter "Verschlußstellung" ist dabei die Position der Gasleitvorrichtung 32' zu verstehen, in der der Gasstrom zumindest teilweise von dem Überlaufbehälter 20 und dem Beschichter 18 abgeschirmt ist. Bei einer Bewegung des Beschichters in Richtung der Bauplattform 14 wird das zweite Ende des Wandelements 46 mittels der Führung 50 über die Aufbau- und Fügezone 16 gehoben beziehungsweise verfahren, so dass das Wandelement 46 beim Beschichten der Aufbau- und Fügezone 16 nicht mit dem Pulverbett des Werkstoffs 26 in Kontakt kommt.

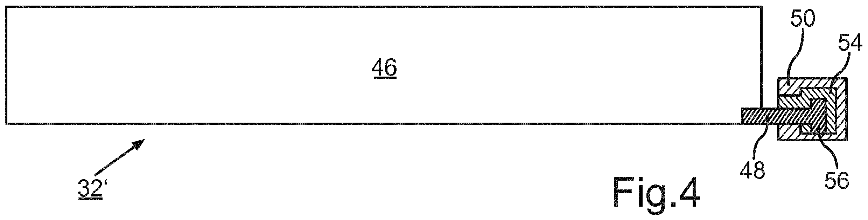

Figur 4 zeigt eine schematische, teilweise geschnittene Darstellung des Wandelements 46 der Vorrichtung 10 gemäß den Figuren 3a und 3b. Man erkennt die Ausgestaltung des Stiftes 48 an dem zweiten Ende des Wandelements 46. Der Stift 48 weist dabei an seinem dem Wandelement 46 gegenüberliegenden Ende eine Verdickung 56 auf, die in einer entsprechenden Ausnehmung 54 der Führung 50 zu liegen kommt und darin geführt wird. Dadurch ist eine zuverlässige Führung des Wandelements 46 in der Führung 50 gewährleistet.

### Bezugszeichenliste

- 10: Vorrichtung
- 12: Bauraum
- 14: Bauplattform
- 16: Fügezone
- 18: Beschichter
- 20: Überlaufbehälter
- 22: Einströmdüse
- 24: Absaugdüse
- 26: Werkstoff
- 28: Vorratsbehälter
- 30: Gasstrom
- 32: Gasleitvorrichtung
- 32': Gasleitvorrichtung
- 34: Schaufelblatt
- 36: Schaufelblatt
- 38: Schaufelblatt
- 40: Drehachse
- 42: Ausnehmung
- 44: Abschrägung
- 46: Wandelement
- 48: Stift
- 50: Führung
- 52: Rückwand
- 54: Ausnehmung
- 56: Verdickung
- 58: Drehgelenk/Scharniergelenk
- 60: Objekt
- 62: Klinge
- 64: Auflagebereich
- 66: Aufnahmebereich

## Patentansprüche

1. Vorrichtung (10) zur Herstellung oder Reparatur eines dreidimensionalen Objekts (60) umfassend:
- mindestens einen Bauraum (12) für ein schichtweises, aufeinanderfolgendes Verfestigen mindestens eines verfestigbaren Werkstoffs (26) in vordefinierten Bereichen zum schichtweisen Aufbau des dreidimensionalen Objekts (60) oder zur schichtweisen Reparatur einzelner Bereiche des dreidimensionalen Objekts (60) innerhalb des Bauraums (12);
- mindestens einen verfahrbaren Beschichter (18) zum Auftrag des Werkstoffs (26) auf mindestens eine im Bauraum (12) ausgebildete Aufbau- und Fügezone (16) einer Bauplattform (14);
- mindestens eine Einströmdüse (22) und mindestens eine Absaugdüse (24) für ein Prozessgas, wobei die Einströmdüse (22) und die Absaugdüse (24) derart angeordnet sind, dass ein zumindest teilweise über der Aufbau- und Fügezone (16) verlaufender Gasstrom (30) ausgebildet wird; und
- mindestens eine innerhalb des Bauraums (12) beweglich angeordnete Gasleitvorrichtung (32, 32'),
**dadurch gekennzeichnet, dass**
die Vorrichtung (10) ferner wenigstens einen Überlaufbehälter (20) umfasst, wobei die Gasleitvorrichtung (32, 32') derart beweglich angeordnet ist, dass der Beschichter (18) und/oder der Überlaufbehälter (20) in einer Verschlußstellung der Gasleitvorrichtung (32, 32') zumindest zeitweise von dem Gasstrom (30) abgeschirmt sind,
wobei die Gasleitvorrichtung (32) in Form eines Schaufelrads mit mindestens drei Schaufelblättern (34, 36, 38) ausgebildet ist und in einem Bereich überhalb des Überlaufbehälters (20) mittels einer Antriebseinheit drehbar angeordnet ist oder derart in einem Bereich überhalb des Überlaufbehälters (20) drehbar angeordnet ist, dass bei einem Überfahren der Gasleitvorrichtung (32) durch den Beschichter (18) dieser mit zumindest einem Teilbereich der Schaufelblätter (34, 36, 38) in Berührung kommt und die Gasleitvorrichtung (32) in Bewegung setzt.

2. Vorrichtung (10) nach Anspruch 1,
**dadurch gekennzeichnet, dass**
mindestens ein Schaufelblatt (34, 38) derart ausgebildet ist, dass ein Ende des Schaufelblatts (34, 38) an einer Kante des Überlaufbehälters (20) und/oder der Aufbau- und Fügezone (16) und/oder einem Auflagebereich (64) zwischen der Bauplattform (14) und dem Überlaufbehälter (20) anliegt und dabei zumindest der Überlaufbehälter (20) von dem Gasstrom (30) mittels des anliegenden Schaufelblatts (34, 38) und des mindestens einen, nicht anliegenden Schaufelblatts (36) abgeschirmt ist.

3. Vorrichtung (10) nach Anspruch 1 oder 2,
**dadurch gekennzeichnet, dass**
das die Gasleitvorrichtung (32) drei Schaufelblätter (34, 36, 38) umfasst, wobei die Schaufelblätter (34, 36, 38) in einem Winkel von 120° zueinander angeordnet sind.

4. Vorrichtung (10) nach einem der vorhergehenden Ansprüche,
**dadurch gekennzeichnet, dass**
das mindestens ein Schaufelblatt (36) schwerer als die anderen Schaufelblätter (34, 38) ausgebildet ist und/oder eine Drehachse der Gasleitvorrichtung (32) exzentrisch zu einem Schnittpunkt der Schaufelblätter (34, 36, 38) angeordnet ist.

5. Vorrichtung (10) nach einem der vorhergehenden Ansprüche,
**dadurch gekennzeichnet, dass**
die Länge der Schaufelblätter (34, 36, 38) parallel zur Drehachse der Gasleitvorrichtung (32) mindestens der Länge einer Kante des Überlaufbehälters (20) und/oder der Aufbau- und Fügezone (16) und/oder einem Auflagebereich (64) zwischen der Bauplattform (14) und dem Überlaufbehälter (20), an dem mindestens ein Schaufelblatt (34, 38) zumindest zeitweise anliegt, entspricht.

6. Vorrichtung (10) nach einem der vorhergehenden Ansprüche,
**dadurch gekennzeichnet, dass**
die Schaufelblätter (34, 36, 38) derart zueinander angeordnet sind, dass bei einem Anliegen eines Schaufelblatts (34, 38) an der Kante des Überlaufbehälters (20) und/oder der Aufbau- und Fügezone (16) und/oder einem Auflagebereich (64) zwischen der Bauplattform (14) und dem Überlaufbehälter (20), überschüssiger Werkstoff (26) aus dem Bereich der Bauplattfonn (14) mittels des Beschichters (14) in einen Aufnahmebereich (66) zwischen dem anliegenden Schaufelblatt (34, 38) und dem nicht-anliegenden Schaufelblatt (36) verbracht wird und mittels einer Drehbewegung der Gleitvorrichtung (32) in Richtung entgegen der Bauplattform (14) in den Überlaufbehälter (20) transportiert wird.

7. Vorrichtung (10) zur Herstellung oder Reparatur eines dreidimensionalen Objekts (60) umfassend:
- mindestens einen Bauraum (12) für ein schichtweises, aufeinanderfolgendes Verfestigen mindestens eines verfestigbaren Werkstoffs (26) in vordefinierten Bereichen zum schichtweisen Aufbau des dreidimensionalen Objekts (60) oder zur schichtweisen Reparatur einzelner Bereiche des dreidimensionalen Objekts (60) innerhalb des Bauraums (12);
- mindestens einen verfahrbaren Beschichter (18) zum Auftrag des Werkstoffs (26) auf mindestens eine im Bauraum (12) ausgebildete Aufbau- und Fügezone (16) einer Bauplattform (14);
- mindestens eine Einströmdüse (22) und mindestens eine Absaugdüse (24) für ein Prozessgas, wobei die Einströmdüse (22) und die Absaugdüse (24) derart angeordnet sind, dass ein zumindest teilweise über der Aufbau- und Fügezone (16) verlaufender Gasstrom (30) ausgebildet wird; und
- mindestens eine innerhalb des Bauraums (12) beweglich angeordnete Gasleitvorrichtung (32, 32'),
**dadurch gekennzeichnet, dass**
die Vorrichtung (10) ferner wenigstens einen Überlaufbehälter (20) umfasst, wobei die Gasleitvorrichtung (32, 32') derart beweglich angeordnet ist, dass der Beschichter (18) und/oder der Überlaufbehälter (20) in einer Verschlußstellung der Gasleitvorrichtung (32, 32') zumindest zeitweise von dem Gasstrom (30) abgeschirmt sind,
wobei die die Gasleitvorrichtung (32') mindestens ein Wandelement (46) umfasst, wobei das Wandelement (46) mit einem ersten Ende an einer dem Bauraum (12) zugewandten Seite des Beschichters (18) angeordnet und mit einem dem ersten Ende gegenüberliegenden zweiten Ende in einer in mindestens einer Seitenwand (52) des Bauraums (12) ausgebildeten Führung (50) geführt ist, wobei die Führung (50) im Bereich der Aufbau- und Fügezone (16) der Bauplattform (14) über dieser angeordnet ist und am Ende der Aufbau- und Fügezone (16) in Richtung des Überlaufbehälters (20) abfällt.

8. Vorrichtung (10) nach Anspruch 7,
**dadurch gekennzeichnet, dass**
das Wandelement (46) biegsam oder nicht-biegsam ausgebildet ist oder dass das Wandelement (46) über ein Dreh- oder Scharniergelenk (58) an dem Beschichter (18) angeordnet ist.

9. Vorrichtung (10) nach einem der Ansprüche 7 oder 8,
**dadurch gekennzeichnet, dass**
die Führung (50) im Bereich der Aufbau- und Fügezone (16) der Bauplattform (14) über dem Gasstrom (30) verlaufend ausgebildet ist.

10. Vorrichtung (10) nach einem der vorhergehenden Ansprüche,
**dadurch gekennzeichnet, dass**
die Bewegung der Gasleitvorrichtung (32, 32') mittels des Beschichters (18) oder mittels einer Antriebseinheit erfolgt.

11. Verfahren zur Herstellung oder Reparatur eines dreidimensionalen Objekts (60) mittels einer Vorrichtung (10), zumindest folgende Schritte umfassend:
a) Schichtweises Auftragen von mindestens einem pulverförmigen Werkstoff (26) mittels mindestens einem Beschichter (18) auf mindestens eine Bauplattform (14) im Bereich einer Aufbau- und Fügezone (16), wobei der Beschichter (18) relativ zu der Bauplattform (14) bewegbar ist;
b) Schichtweises und lokales Verschmelzen und/oder Versintern des Werkstoffs (26) durch Zuführen von Energie mittels wenigstens eines Hochenergiestrahls im Bereich der Aufbau- und Fügezone (16) zum Ausbilden einer Schicht des Objekts (60);
c) Schichtweises Absenken der Bauplattform (14) um eine vordefinierte Schichtdicke; und
d) Wiederholen der Schritte a) bis c) bis zur Fertigstellung des Objekts (60),
**dadurch gekennzeichnet, dass**
für ein zumindest zeitweises Abschirmen des Beschichters (18) und/oder eines Überlaufbehälters (20) für überschüssigen Werkstoff (26) von einem zumindest über der Aufbau- und Fügezone (16) verlaufenden Gasstrom (30) mindestens eine Gasleitvorrichtung (32, 32') mittels des Beschichters (18) oder mittels einer Antriebseinheit in eine Verschlußstellung bewegt wird,
wobei die Gasleitvorrichtung (32) in Form eines Schaufelrads mit mindestens drei Schaufelblättern (34, 36, 38) ausgebildet ist und derart in einem Bereich überhalb des Überlaufbehälters (20) der Vorrichtung (10) drehbar angeordnet ist, dass bei einem Überfahren der Gasleitvorrichtung (32) durch den Beschichter (18) dieser mit zumindest einem Teilbereich der Schaufelblätter (34, 36, 38) in Berührung kommt und die Gasleitvorrichtung (32) in Bewegung setzt oder wobei die Gasleitvorrichtung (32') mindestens ein Wandelement (46) umfasst, wobei das Wandelement (46) mit einem ersten Ende an einer einem Bauraum (12) der Vorrichtung (10) zugewandten Seite des Beschichters (18) angeordnet und bewegt wird und mit einem dem ersten Ende gegenüberliegenden zweien Ende in einer in mindestens einer Seitenwand (52) des Bauraums (12) ausgebildeten Führung (50) geführt ist, wobei die Führung (50) im Bereich der Aufbau- und Fügezone (16) der Bauplattform (14) über dieser angeordnet ist und am Ende der Aufbau- und Fügezone (16) in Richtung des Überlaufbehälters (20) abfällt.

12. Gasleitvorrichtung (32) zur Verwendung in einer Vorrichtung (10) zur generativen Herstellung oder Reparatur eines dreidimensionalen Objekts (60),
**dadurch gekennzeichnet, dass**
die Gasleitvorrichtung (32) in Form eines Schaufelrads mit mindestens drei Schaufelblättern (34, 36, 38) ausgebildet ist und mittels einer Antriebseinheit drehbar ist oder derart in einem Bereich überhalb eines Überlaufbehälters (20) der Vorrichtung (10) drehbar angeordnet ist, dass bei einem Überfahren der Gasleitvorrichtung (32) durch einen Beschichter (18) der Vorrichtung (10) dieser mit zumindest einem Teilbereich der Schaufelblätter (34, 36, 38) in Berührung kommt und die Gasleitvorrichtung (32) in Bewegung setzt.

13. Gasleitvorrichtung (32') zur Verwendung in einer Vorrichtung (10) zur generativen Herstellung oder Reparatur eines dreidimensionalen Objekts (60),
**dadurch gekennzeichnet, dass**
die Gasleitvorrichtung (32') mindestens ein Wandelement (46) umfasst, wobei das Wandelement (46) mit einem ersten Ende an einer einem Bauraum (12) der Vorrichtung (10) zugewandten Seite eines Beschichters (18) der Vorrichtung (10) angeordnet und mit einem dem ersten Ende gegenüberliegenden zweiten Ende in einer in mindestens einer Seitenwand (52) des Bauraums (12) ausgebildeten Führung (50) geführt ist, wobei die Führung (50) im Bereich einer Aufbau- und Fügezone (16) einer Bauplattform (14) über dieser angeordnet ist und am Ende der Aufbau- und Fügezone (16) in Richtung eines Überlaufbehälters (20) abfällt.

## Claims

1. Device (10) for manufacturing or repairing a three-dimensional object (60),
comprising:
- at least one construction space (12) for consecutively hardening layers of at least one material (26) that can be hardened, in predefined regions, for building the three-dimensional object (60) layer by layer, or for repairing individual regions of the three-dimensional object (60) layer by layer within the construction space (12);
- at least one movable coater (18) for depositing the material (26) on at least one building and joining zone (16) of a construction platform (14), which zone is formed in the construction space (12);
- at least one inflow nozzle (22) and at least one extraction nozzle (24) for a process gas, the inflow nozzle (22) and the extraction nozzle (24) being arranged such that a gas flow (30) is formed that extends over the building and joining zone (16) at least in part; and
- at least one gas-conveying apparatus (32, 32') arranged so as to be movable within the construction space (12),
**characterized in that**
the device (10) further comprises at least one overflow receptacle (20), the gas-conveying apparatus (32, 32') being movably arranged such that the coater (18) and/or the overflow receptacle (20) are shielded from the gas flow (30) when the gas-conveying apparatus (32, 32') is in a locked position, at least periodically,
the gas-conveying apparatus (32) being in the form of a blade wheel having at least three blades (34, 36, 38) and being arranged in a region above the overflow receptacle (20) so as to be rotatable by means of a drive unit, or being rotatably arranged in a region above the overflow receptacle (20) such that when the coater (18) passes over the gas-conveying apparatus (32), said coater comes into contact with at least one sub-region of the blades (34, 36, 38) and sets the gas-conveying apparatus (32) in motion.

2. Device (10) according to claim 1, **characterized in that**
at least one blade (34, 38) is designed such that one end of the blade (34, 38) abuts an edge of the overflow receptacle (20) and/or of the building and joining zone (16) and/or of a contact region (64) between the construction platform (14) and the overflow receptacle (20), and therefore at least the overflow receptacle (20) is shielded from the gas flow (30) by means of the abutting blade (34, 38) and the at least one non-abutting blade (36).

3. Device (10) according to either claim 1 or claim 2,
**characterized in that**
the gas-conveying apparatus (32) comprises three blades (34, 36, 38), the blades (34, 36, 38) being arranged at an angle of 120° from one another.

4. Device (10) according to any of the preceding claims,
**characterized in that**
the at least one blade (36) is heavier than the other blades (34, 38), and/or a rotational axis of the gas-conveying apparatus (32) is arranged eccentrically with respect to a point of intersection of the blades (34, 36, 38).

5. Device (10) according to any of the preceding claims, **characterized in that**
the length of the blades (34, 36, 38) in parallel with the rotational axis of the gas-conveying apparatus (32) corresponds to at least the length of an edge of the overflow receptacle (20) and/or of the building and joining zone (16) and/or of a contact region (64) between the construction platform (14) and the overflow receptacle (20), which edge is abutted by at least one blade (34, 38), at least periodically.

6. Device (10) according to any of the preceding claims,
**characterized in that**
the blades (34, 36, 38) are arranged with respect to one another such that when a blade (34, 38) abuts the edge of the overflow receptacle (20) and/or of the building and joining zone (16) and/or of a contact region (64) between the construction platform (14) and the overflow receptacle (20), excess material (26) is brought by means of the coater (14) from the region of the construction platform (14) to a receiving region (66) between the abutting blade (34, 38) and the non-abutting blade (36), and moved to the overflow receptacle (20) in a direction away from the construction platform (14) by means of a rotational movement of the gas-conveying apparatus (32).

7. Device (10) for manufacturing or repairing a three-dimensional object (60), comprising:
- at least one construction space (12) for consecutively hardening layers of at least one material (26) that can be hardened, in predefined regions, for building the three-dimensional object (60) layer by layer, or for repairing individual regions of the three-dimensional object (60) layer by layer within the construction space (12);
- at least one movable coater (18) for depositing the material (26) on at least one building and joining zone (16) of a construction platform (14), which zone is formed in the construction space (12);
- at least one inflow nozzle (22) and at least one extraction nozzle (24) for a process gas, the inflow nozzle (22) and the extraction nozzle (24) being arranged such that a gas flow (30) is formed that extends over the building and joining zone (16) at least in part; and
- at least one gas-conveying apparatus (32, 32') arranged so as to be movable within the construction space (12),
**characterized in that**
the device (10) further comprises at least one overflow receptacle (20), the gas-conveying apparatus (32, 32') being movably arranged such that the coater (18) and/or the overflow receptacle (20) are shielded, at least periodically, from the gas flow (30) when the gas-conveying apparatus (32, 32') is in a locked position, the gas-conveying apparatus (32') comprising at least one wall element (46), a first end of the wall element (46) being arranged on a side of the coater (18) that faces the construction space (12), and a second end of said wall element, which is opposite the first end, being guided into a guide (50) in at least one side wall (52) of the construction space (12), the guide (50) being arranged above the construction platform (14) in the region of the building and joining zone (16) thereof and descending toward the overflow receptacle (20) at the end of the building and joining zone (16).

8. Device (10) according to claim 7,
**characterized in that**
the wall element (46) is flexible or non-flexible, or **in that** the wall element (46) is arranged on the coater (18) above a pivot joint or a hinge joint (58).

9. Device (10) according to either claim 7 or claim 8,
**characterized in that**
the guide (50) extends above the gas flow (30) in the region of the building and joining zone (16) of the construction platform (14).

10. Device (10) according to any of the preceding claims,
**characterized in that**
the gas-conveying apparatus (32, 32') is set in motion by means of the coater (18) or by means of a drive unit.

11. Method for manufacturing or repairing a three-dimensional object (60) by means of a device (10), comprising at least the following steps:
a) depositing at least one material (26) in powder form on at least one construction platform (14) in the region of a building and joining zone (16), layer by layer, by means of at least one coater (18), the coater (18) being movable relative to the construction platform (14);
b) locally melting and/or sintering the material (26), layer by layer, by introducing energy by means of at least one high-energy beam in the region of the building and joining zone (16) in order to form a layer of the object (60);
c) lowering the construction platform (14), layer by layer, by a predefined layer thickness; and
d) repeating steps a) to c) until the object (60) has been completed,
**characterized in that**
in order to shield, at least periodically, the coater (18) and/or an overflow receptacle (20) for excess material (26) from a gas flow (30) that extends at least over the building and joining zone (16), at least one gas-conveying apparatus (32, 32') is moved into a locked position by means of the coater (18) or by means of a drive unit,
the gas-conveying apparatus (32) being in the form of a blade wheel having at least three blades (34, 36, 38) and being rotatably arranged in a region above the overflow receptacle (20) of the device (10) such that when the coater (18) passes over the gas-conveying apparatus (32), said coater comes into contact with at least one sub-region of the blades (34, 36, 38) and sets the gas-conveying apparatus (32) in motion, or
the gas-conveying apparatus (32') comprising at least one wall element (46), a first end of the wall element (46) being arranged and moved on a side of the coater (18) that faces a construction space (12) of the device (10), and a second end of said wall element, which is opposite the first end, being guided into a guide (50) in at least one side wall (52) of the construction space (12), the guide (50) being arranged above the construction platform (14) in the region of the building and joining zone (16) thereof and descending toward the overflow receptacle (20) at the end of the building and joining zone (16).

12. Gas-conveying apparatus (32) for use in a device (10) for the additive manufacture or repair of a three-dimensional object (60),
**characterized in that**
the gas-conveying apparatus (32) is in the form of a blade wheel having at least three blades (34, 36, 38) and being rotatable by means of a drive unit or being rotatably arranged in a region above an overflow receptacle (20) of the device (10) such that when a coater (18) of the device (10) passes over the gas-conveying apparatus (32), said coater comes into contact with at least one sub-region of the blades (34, 36, 38) and sets the gas-conveying apparatus (32) in motion.

13. Gas-conveying apparatus (32') for use in a device (10) for the additive manufacture or repair of a three-dimensional object (60),
**characterized in that**
the gas-conveying apparatus (32') comprises at least one wall element (46), a first end of the wall element (46) being arranged on a side of the coater (18) of the device (10) that faces a construction space (12) of the device (10), and a second end of said wall element, which is opposite the first end, being guided into a guide (50) in at least one side wall (52) of the construction space (12), the guide (50) being arranged above a construction platform (14) in the region of a building and joining zone (16) thereof and descending toward the overflow receptacle (20) at the end of the building and joining zone (16).

## Revendications

1. Dispositif (10) de fabrication ou de réparation d'un objet tridimensionnel (60), le dispositif comprenant :
- au moins un espace de construction (12) destiné à la solidification successive par couches d'au moins une matière solidifiable (26) dans des zones prédéfinies pour construire couche par couche l'objet tridimensionnel (60) ou à la réparation par couches des zones individuelles de l'objet tridimensionnel (60) dans l'espace de construction (12) ;
- au moins un dispositif formateur de couches mobile (18) destiné déposer la matière (26) sur au moins une zone de construction et de jonction (16), formée dans l'espace de construction (12), d'une plateforme de construction (14) ;
- au moins une buse d'admission (22) et au moins une buse d'aspiration (24) destinées à un gaz de procédé, la buse d'admission (22) et la buse d'aspiration (24) étant disposées de façon à former un flux de gaz (30) s'étendant au moins en partie au-dessus de la zone de construction et de jonction (16) ; et
- au moins un dispositif de guidage de gaz (32, 32') disposé de manière mobile à l'intérieur de l'espace de construction (12),
**caractérisé en ce que**
le dispositif (10) comprend en outre au moins un récipient de trop-plein (20), le dispositif de guidage de gaz (32, 32') étant disposé de manière mobile de telle sorte que le dispositif formateur de couches (18) et/ou le récipient de trop-plein (20) soient au moins temporairement protégés du flux de gaz (30) dans une position fermée du dispositif de guidage de gaz (32, 32'),
le dispositif de guidage de gaz (32) se présentant sous la forme d'une roue à aubes munie d'au moins trois pales (34, 36, 38) et étant disposé dans une zone située au-dessus du réservoir de trop-plein (20) de manière à pouvoir être entraîné en rotation au moyen d'une unité d'entraînement ou étant disposé de manière rotative dans une zone située au-dessus du récipient de trop-plein (20) de telle sorte que, lorsque le dispositif de guidage de gaz (32) est traversé par le dispositif formateur de couches (18), ce dernier vient en contact avec au moins une zone des pales (34, 36, 38) et le dispositif de guidage de gaz (32) est mis en mouvement.

2. Dispositif (10) selon la revendication 1,
**caractérisé en ce que**
au moins une pale (34, 38) est formée de telle sorte que l'une des extrémités de la pale (34, 38) vient en appui sur un bord du récipient de trop-plein (20) et/ou sur la zone de construction et de jonction (16) et/ou sur une zone d'appui (64) située entre la plate-forme de construction (14) et le récipient de trop-plein (20) et au moins le récipient de trop-plein (20) est protégé du flux de gaz (30) au moyen de la pale adjacente (34, 38) et de l'au moins une pale non-adjacente (36).

3. Dispositif (10) selon la revendication 1 ou 2,
**caractérisé en ce que**
le dispositif de guidage de gaz (32) comporte trois pales (34, 36, 38), les pales (34, 36, 38) étant disposées de manière à former un angle de 120° entre elles.

4. Dispositif (10) selon l'une des revendications précédentes,
**caractérisé en ce que**
l'au moins une pale (36) est conçue pour être plus lourde que les autres pales (34, 38) et/ou un axe de rotation du dispositif de guidage de gaz (32) est disposé de manière excentrée par rapport à l'intersection des pales (34, 36, 38).

5. Dispositif (10) selon l'une des revendications précédentes,
**caractérisé en ce que**
la longueur des pales (34, 36, 38) parallèlement à l'axe de rotation du dispositif de guidage de gaz (32) correspond au moins à la longueur d'un bord du récipient de trop-plein (20) et/ou à la zone de construction et de jonction (16) et/ou une zone d'appui (64) située entre la plate-forme de construction (14) et le récipient de trop-plein (20) sur lequel au moins une pale (34, 38) vient au moins temporairement en appui.

6. Dispositif (10) selon l'une des revendications précédentes,
**caractérisé en ce que**
les pales (34, 36, 38) sont disposés les unes par rapport aux autres de telle sorte que, lorsqu'une pale (34, 38) vient en appui sur le bord du récipient de trop-plein (20) et/ou sur la zone de construction et de jonction (16) et/ou sur une zone d'appui (64) située entre la plate-forme de construction (14) et le récipient de trop-plein (20), de la matière en excès (26) soit transférée au moyen du dispositif formateur de couches (14) de la zone de la plate-forme de construction (14) dans une zone de réception (66) située entre la pale adjacente (34, 38) et la pale non-adjacente (36) et soit transportée dans le récipient de trop-plein (20) par un mouvement de rotation du dispositif de glissement (32) dans la direction opposée à la plate-forme de construction (14).

7. Dispositif (10) de fabrication ou de réparation d'un objet tridimensionnel (60), le dispositif comprenant :
- au moins un espace de construction (12) destiné à la solidification successive par couches d'au moins une matière solidifiable (26) dans des zones prédéfinies pour construire couche par couche l'objet tridimensionnel (60) ou à la réparation par couches des zones individuelles de l'objet tridimensionnel (60) dans l'espace de construction (12) ;
- au moins un dispositif formateur de couches mobile (18) destiné déposer la matière (26) sur au moins une zone de construction et de jonction (16), formée dans l'espace de construction (12), d'une plateforme de construction (14) ;
- au moins une buse d'admission (22) et au moins une buse d'aspiration (24) destinées à un gaz de procédé, la buse d'admission (22) et la buse d'aspiration (24) étant disposées de façon à former un flux de gaz (30) s'étendant au moins en partie au-dessus de la zone de construction et de jonction (16) ; et
- au moins un dispositif de guidage de gaz (32, 32') disposé de manière mobile à l'intérieur de l'espace de construction (12),
**caractérisé en ce que**
le dispositif (10) comprend en outre au moins un récipient de trop-plein (20), le dispositif de guidage de gaz (32, 32') étant disposé de manière mobile de telle sorte que le dispositif formateur de couches (18) et/ou le récipient de trop-plein (20) soient au moins temporairement protégés du flux de gaz (30) dans une position fermée du dispositif de guidage de gaz (32, 32'),
le dispositif de guidage de gaz (32') comprenant au moins un élément de paroi (46), l'élément de paroi (46) étant disposé, par une première extrémité, sur un côté du dispositif formateur de couches (18) qui est dirigé vers l'espace de construction (12) et, par une deuxième extrémité opposée à la première extrémité, dans un guide (50) formé dans au moins une paroi latérale (52) de l'espace de construction (12), le guide (50) étant disposé au niveau de la zone de construction et de jonction (16) de la plate-forme de construction (14) au-dessus de cette dernière et déclinant à l'extrémité de la zone de construction et de jonction (16) en direction du récipient de trop-plein (20).

8. Dispositif (10) selon la revendication 7,
**caractérisé en ce que**
l'élément de paroi (46) est conçu pour être flexible ou non flexible ou **en ce que** l'élément de paroi (46) est disposé au niveau du dispositif de formation de couches (18) par le biais d'une articulation tournante ou à charnière (58).

9. Dispositif (10) selon l'une des revendications 7 ou 8,
**caractérisé en ce que**
le guide (50) est conçu pour s'étendre au-dessus du flux de gaz (30) au niveau de la zone de construction et de jonction (16) de la plate-forme de construction (14).

10. Dispositif (10) selon l'une des revendications précédentes,
**caractérisé en ce que**
le mouvement du dispositif de guidage de gaz (32, 32') est effectué au moyen du dispositif formateur de couches (18) ou au moyen d'une unité d'entraînement.

11. Procédé de fabrication ou de réparation d'un objet tridimensionnel (60) au moyen d'un dispositif (10), le procédé comprenant au moins les étapes suivantes :
a) déposer couche par couche au moins une matière pulvérulente (26) au moyen d'au moins un dispositif formateur de couches (18) sur au moins une plate-forme de construction (14) au niveau de la zone de construction et de jonction (16), le dispositif formateur de couches (18) étant mobile par rapport à la plate-forme de construction (14) ;
b) faire fondre et/ou fritter couche par couche et localement la matière (26) par apport d'énergie au moyen d'au moins un faisceau de haute énergie au niveau de la zone de construction et de jonction (16) pour former une couche de l'objet (60) ;
c) abaisser couche par couche la plate-forme de construction (14) d'une épaisseur de couche prédéfinie ; et
d) répéter les étapes a) à c) jusqu'à l'achèvement de l'objet (60),
**caractérisé en ce que**,
pour protéger au moins temporairement le dispositif formateur de couches (18) et/ou un récipient de trop-plein (20), destiné à de la matière en excès (26), d'un flux de gaz (30) au moins au-dessus de la zone de construction et de jonction (16), au moins un dispositif de guidage de gaz (32, 32') est déplacé jusque dans une position fermée au moyen du dispositif formateur de couches (18) ou au moyen d'une unité d'entraînement,
le dispositif de guidage de gaz (32) se présentant sous la forme d'une roue à aubes munie d'au moins trois pales (34, 36, 38) et étant disposé de manière rotative dans une zone située au-dessus du réservoir de trop-plein (20) du dispositif (10) de telle sorte que, lorsque le dispositif de guidage de gaz (32) est traversé par le dispositif formateur de couches (18), ce dernier vient en contact avec au moins une zone des pales (34, 36, 38) et le dispositif de guidage de gaz (32) est mis en mouvement ou
le dispositif de guidage de gaz (32') comprenant au moins un élément de paroi (46), l'élément de paroi (46) étant disposé, par une première extrémité, sur un côté du dispositif formateur de couches (18) qui est dirigé vers un espace de construction (12) du dispositif (10) et, par une deuxième extrémité opposée à la première extrémité, dans un guide (50) formé dans au moins une paroi latérale (52) de l'espace de construction (12), le guide (50) étant disposé au niveau de la zone de construction et de jonction (16) de la plate-forme de construction (14) au-dessus de cette dernière et déclinant à l'extrémité de la zone de construction et de jonction (16) en direction du récipient de trop-plein (20).

12. Dispositif de guidage de gaz (32) destiné à être utilisé dans un dispositif (10) de fabrication ou réparation générative d'un objet tridimensionnel (60),
**caractérisé en ce que**
le dispositif de guidage de gaz (32) se présente sous la forme d'une roue à aubes munie d'au moins trois pales (34, 36, 38) et est entraîné en rotation au moyen d'une unité d'entraînement ou est disposé de manière rotative dans une zone située au-dessus du récipient de trop-plein (20) du dispositif (10) de telle sorte que, lorsque le dispositif de guidage de gaz (32) est traversé par le dispositif formateur de couches (18) du dispositif (10), ce dernier vient en contact avec au moins une zone des pales (34, 36, 38) et le dispositif de guidage de gaz (32) est mis en mouvement.

13. Dispositif de guidage de gaz (32') destiné à être utilisé dans un dispositif (10) de fabrication ou réparation générative d'un objet tridimensionnel (60),
**caractérisé en ce que**
le dispositif de guidage de gaz (32') comporte au moins un élément de paroi (46), l'élément de paroi (46) étant disposé, par une première extrémité, sur un côté du dispositif formateur de couches (18) du dispositif (10) qui est dirigé vers l'espace de construction (12) du dispositif (10) et, par une deuxième extrémité opposée à la première extrémité, dans un guide (50) formé dans au moins une paroi latérale (52) de l'espace de construction (12), le guide (50) étant disposé au niveau de la zone de construction et de jonction (16) de la plate-forme de construction (14) au-dessus de cette dernière et déclinant à l'extrémité de la zone de construction et de jonction (16) en direction du récipient de trop-plein (20).
